# EUROPEAN PATENT APPLICATION

(11) **EP 2 369 753 A2**
(43) Date of publication of application: **28.09.2011**
(21) Application number: 11154242.9
(22) Date of filing: 11.02.2011
(51) Int. Cl.: H04B 1/18

(54) **Wireless communication terminal**

(30) Priority: 24.03.2010 US 317042 P; 20.12.2010 US 973469
(71) Applicant: Sony Ericsson Mobile Communications Japan, Inc., Tokyo 108-0075 (JP)
(72) Inventor: Shoji, Hideaki, Minato-ku Tokyo 108-0075 (JP)
(74) Representative: Jackson, Jonathan Andrew

(57) **Abstract**

A wireless communication terminal including an antenna that supports first and second frequency bands, an RF circuit connected to the antenna; a shunt circuit connected between a connection point of the antenna and the RF circuit, and a ground, and a control unit that controls the shunt circuit.

## Description

The present invention relates to a wireless communication terminal including an antenna device for performing wireless communication, such as, for example, a mobile telephone terminal.

In recent years, some such wireless communication terminals, which include a variety of functions, have appeared, such as wireless communication terminals having a plurality of bands in which operating frequency bands differ, wireless communication terminals having a diversity antenna configuration using a plurality of antennas, and wireless communication terminals having a GPS receiving function and a Bluetooth (BT) (registered trademark) communication function in addition to a telephone communication function.

Japanese Patent Application Publication No. 2005-142930 discloses a technology in which first and second matching circuits are switched via a switch connected in series to an antenna so as to perform switching between bands at which the antenna operates.

Japanese Patent Application Publication No. 2005-151194 (Fig. 3) discloses a technology in which a wireless communication terminal including a transmitting and receiving antenna and a receiving-only antenna has a first reception mode in which only a transmitting and receiving antenna operates and diversity is not performed, and a second reception mode in which after independent reception circuits connected to each antenna perform an amplification process on a received signal, a diversity of combining the two signals is performed. In the first reception mode in which diversity is not performed, a switch is switched to a wireless circuit (for example, GPS circuit) of another communication system, and the impedance characteristics are optimized by the band of a band-pass filter connected to a subsequent stage regarding a transmission and reception band used by the transmitting and receiving antenna so that a deterioration in the efficiency of the transmitting and receiving antenna is reduced most by adjusting a phase shifter.

Japanese Patent Application Publication No. 2000-216716 discloses a technology in which, in antenna switching diversity reception in a time-division multiple-access portable radio device, optimal termination conditions of a non-selected branch (receiving antenna) are switched between transmission time and reception time when a transmitting and receiving antenna is being selected. As a result, an adverse influence as a result of antenna coupling with a non-selected-side antenna is removed.

Japanese Patent Application Publication No. 2000-286767 discloses a technology in which a personal-digital-cellular (PDC) mobile phone device of a diversity method using a transmitting and receiving antenna and a receiving antenna is provided with a matching circuit between an antenna matching circuit and an antenna selector switch, so that the characteristics of the selected antenna are optimized by adjusting the impedance when the antenna selector switch side is viewed from the non-selected antenna. More specifically, a concentrated constant circuit or a transmission line is inserted into the radio frequency (RF) line connected to the non-selected-side antenna, and an adverse influence by antenna coupling is removed.

In the technology disclosed in Japanese Patent Application Publication No. 2005-142930, since an insertion loss of the switch is added to all the bands, antenna efficiency is deteriorated. Furthermore, since all the bands are temporarily cut off in a transient time in the switching of the switch, the antenna gains of the other bands in which simultaneous operations are being performed are temporarily deteriorated.

In Japanese Patent Application Publication No. 2005-151194, since a switch is connected in series between the antenna and the reception circuit, an insertion loss becomes a problem. Furthermore, it is difficult to apply the technology thereof to an antenna that supports a plurality of bands in which a plurality of bands simultaneously operates. Furthermore, since all the bands are temporarily cut off in a transient time in the switching of the switch, the antenna gains of the other bands in which simultaneous operations are being performed are temporarily deteriorated.

In the technology disclosed in Japanese Patent Application Publication Nos. 2000-216716 and 2000-286767, an insertion loss of the switch connected in series with the RF line becomes a problem. It is difficult to apply the technology thereof to an antenna that supports a plurality of bands in which simultaneous operations are being performed. For example, it is difficult to apply the technology thereof to applications in which frequency bands of a GPS receiving function and a Bluetooth (BT) (registered trademark) communication function, which differ from the frequency band of the telephone communication function, are simultaneously used. Furthermore, it is not possible to adjust impedance matching of only one of the frequency bands during simultaneous use.

As described above, in the related art, a switch pass loss occurs. Even if a low-loss switch is used, deterioration in antenna efficiency of approximately 0.4 dB occurs.

In a case where an antenna is to be shared as a multi-system antenna, it has been difficult to adaptively achieve impedance adjustment, such as only the system (band) of characteristics being cut off without incurring an insertion loss of the switch.

It is desirable to adaptively achieve impedance matching in a specific frequency band in which an antenna operates without incurring an insertion loss of a switch in a wireless communication terminal including an antenna that supports a plurality of frequency bands.

It is also desirable to cut off a connection to an RF circuit of an antenna when one of the antennas is not operating without inserting a switch in series with an RF line in a diversity antenna configuration.

According to an embodiment of the present invention, there is provided a wireless communication terminal including an antenna that supports first and second frequency bands, an RF circuit connected to the antenna; a shunt circuit connected between a connection point of the antenna and the RF circuit, and a ground, and a control unit that controls the shunt circuit.

The shunt circuit may include a filter through which one of the first and second frequency bands is passed, a matching circuit configured to receive an output of the filter and adjust a matching state of the frequency band, a termination circuit configured to receive an output of the filter and make an impedance of the shunt circuit when viewed from the connection point side be infinity or open, and a switch configured to selectively connect an output of the filter to one of the matching circuit and the termination circuit. The control unit may switch the switch on the basis of a use state.

In this configuration, a switch is not inserted in series between the antenna and the RF circuit, but is connected in parallel. For this reason, the insertion loss of the switch does not exist.

With a configuration in which a signal of one of frequency bands, which has passed through a filter, is switched and connected to one of a matching circuit and a termination circuit by using a switch, it is possible for a terminal that supports multiple bands to perform impedance adjustment in the one frequency band. Furthermore, in a terminal of a diversity antenna configuration, it is possible to block passing of the frequency band to an RF circuit when the diversity function is OFF.

It is possible to realize a lower loss when compared to the related art in which a switch is inserted in series with an RF line, and it is possible to realize matching adjustment of a specific frequency band and functions of specific frequency band elimination without exerting an adverse influence upon other frequency bands.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Fig. 1 shows the main portion of a wireless communication terminal in a first embodiment of the present invention;
Fig. 2 shows a specific example of the configuration of the interior of a shunt circuit, which corresponds to the configuration of Fig. 1;
Fig. 3 shows the configuration of a main portion of a wireless communication terminal in a second embodiment of the present invention;
Fig. 4 is a graph showing frequency characteristics of mismatch loss in the configuration of Fig. 3;
Fig. 5 shows a diversity antenna configuration of the related art; and
Fig. 6 shows the configuration of a modification of the first embodiment of the present invention.

A preferred embodiment of the present invention will be described in detail below with reference to the drawings.

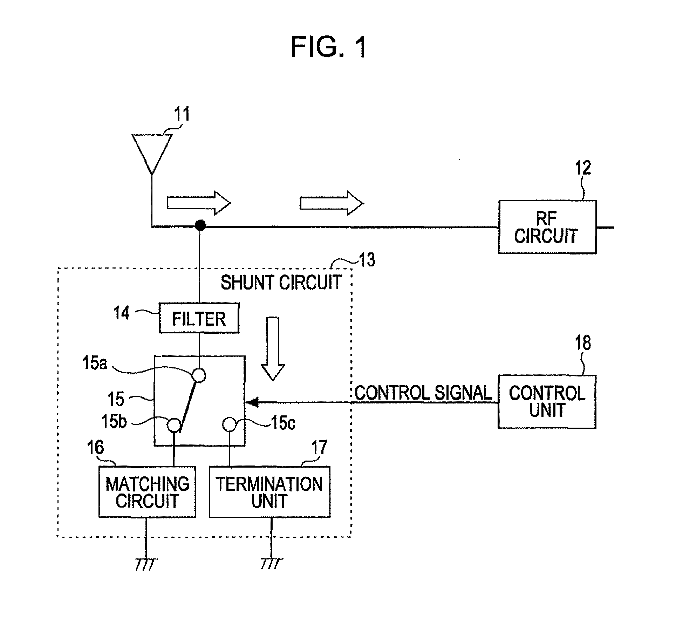

Fig. 1 shows the configuration of a main portion of a wireless communication terminal in a first embodiment of the present invention.

An antenna 11 is a multi-band antenna formed of a single feeder. That is, the antenna 11 is formed of a multi-resonant antenna that supports a plurality of frequency bands, for example, a first band of a highfrequency band and a second band of a low-frequency band. Regarding a received signal of the antenna 11, the separation of the band is performed by a radio frequency (RF) circuit 12, or a switch and a multiplexer in the stage subsequent to the RF circuit 12. The RF circuit 12 includes a transmission and receiving circuit for each band.

A shunt circuit 13 connected to the ground is provided between the antenna 11 and the RF circuit 12. The shunt circuit 13 includes a filter 14 having its input end connected to a connection point and having its output end connected to an input end 15a of a switch 15, a matching circuit 16 connected between an output end 15b of the switch 15 and the ground, and a termination circuit 17 connected between the other output end 15c of the switch 15 and the ground.

The filter 14 is a band-pass filter through which a signal of a frequency band of one of bands (a low-frequency band in this example) is passed. The switch 15 is a single-pole dual-throw (SPDT) switch that is switched in response to a control signal output from a control unit 18, and causes the output of the filter 14 to be selectively connected to one of the matching circuit 16 and the termination circuit 17. The matching circuit 16 is a matching circuit for adjusting impedance matching with respect to a signal of the band, which passes through the filter. The termination circuit 17 is a termination circuit that makes the impedance of the shunt circuit 13 be infinity (open) when viewed from the connection point side with regard to the band passing through the filter.

The control unit 18 generates a control signal that switches the switch 15 in response to the use state of the wireless communication terminal. The use state refers to a state in which a change in the impedance of the antenna device occurs, and relates to, for example, a state in which the housing of a folding-type (or slide-type) mobile terminal or the like is being opened/closed, or a mobile terminal is being used for mail/Web or for a phone call (the relationship between the user's head part and the antenna differs between the two states), or a diversity function is turned ON/OFF.

While the switch 15 has been switched to the termination circuit 17 side, since the termination circuit 17 becomes open with regard to the band passing through the filter 14, the signals of the two bands are directly transmitted to the RF circuit 12 side. In the present embodiment, this state is set as a default state.

When a change in the use state such that an impedance change of the antenna device such as that described above is expected occurs, the control unit 18 switches the switch 15 to the matching circuit 16 side. As a result, an impedance change of the antenna device can be compensated for as regards to one of the bands, so that an increase in the matching loss thereof, matching mismatch thereof, and the like can be reduced. Furthermore, since the signal path from the antenna 11 to the RF circuit 12 is not cut off even momentarily when the switch 15 is switched, it is possible for the two bands to continue the operating state. For example, it is possible to continue to use the telephone communication function and the data communication function without any problems at the same time as the GPS receiving function and the Bluetooth (BT) (registered trademark) communication function, which differs in the frequency band from the telephone communication function and the data communication function.

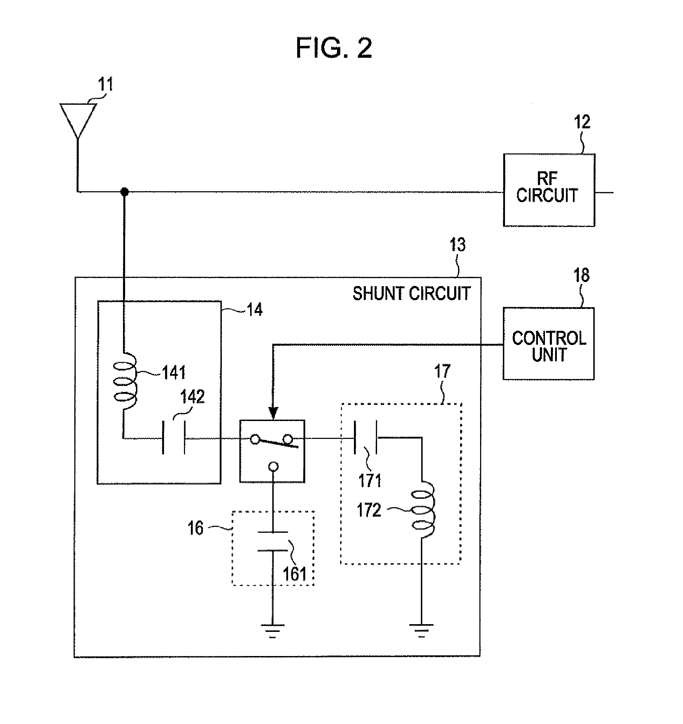

Fig. 2 shows a specific example of the configuration of the interior of the shunt circuit 13 corresponding to the configuration of Fig. 1.

The filter 14 is constituted by an LC circuit in which an inductor 141 and a capacitor 142 are connected in series. In addition, although not shown in the figures, the filter 14 can also be constituted by a parallel LC circuit, and a three-element T-type low-pass filter (LPF) or high-pass filter (HPF).

The matching circuit 16 is formed of a capacitor 161. The termination circuit 17 is formed of an LC circuit in which a capacitor 171 and an inductor 172 are connected in series with each other. The matching circuit 16 and the termination circuit 17 are not limited to the configurations shown in the figures.

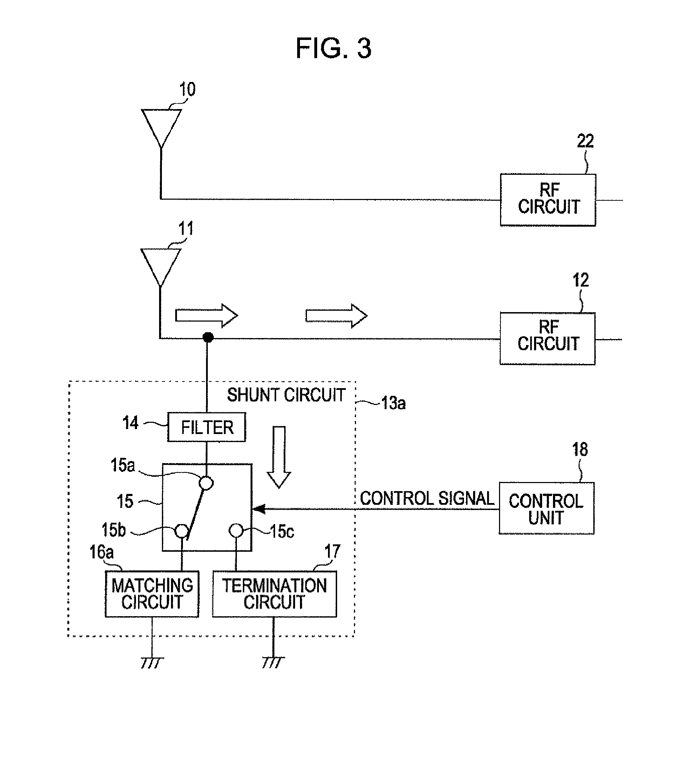

Fig. 3 shows the configuration of the main portion of a wireless communication terminal according to a second embodiment of the present invention. This terminal is related to a diversity configuration in which a sub-antenna 11 is provided with respect to a main antenna 10, and the outputs of RF circuits 22 are combined (or switched) and used. In this case, the configuration of a shunt circuit 13a connected to the sub-antenna 11 is apparently the same as the shunt circuit 13 of the first embodiment, but the shunt circuit 13a has a matching circuit 16a whose function is different from that of the matching circuit 16.

In this configuration, when the diversity function is ON, the control unit 18 switches the switch 15 to the termination circuit 17 side. In the operation at this time, similarly to the first embodiment, the termination circuit 17 becomes open with regard to a band passing through the filter 14. Consequently, the signals of the two bands are directly transmitted to the RF circuit 12 side.

When the diversity function is OFF, the control unit 18 switches the switch 15 to the matching circuit 16a side. At this time, regarding a band passing through the filter 14, mismatch loss is increased by causing a matching circuit 16a to cause unmatch (mismatch) to occur, so that passing of the band to the RF circuit 12 is blocked. In this meaning, the matching circuit 16a may be a termination circuit that performs termination at a certain phase.

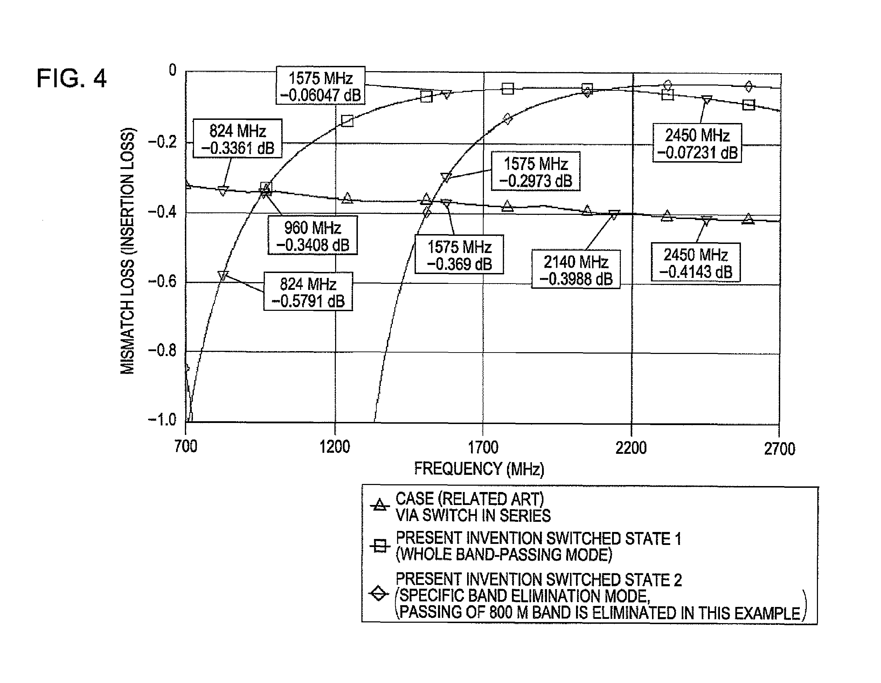

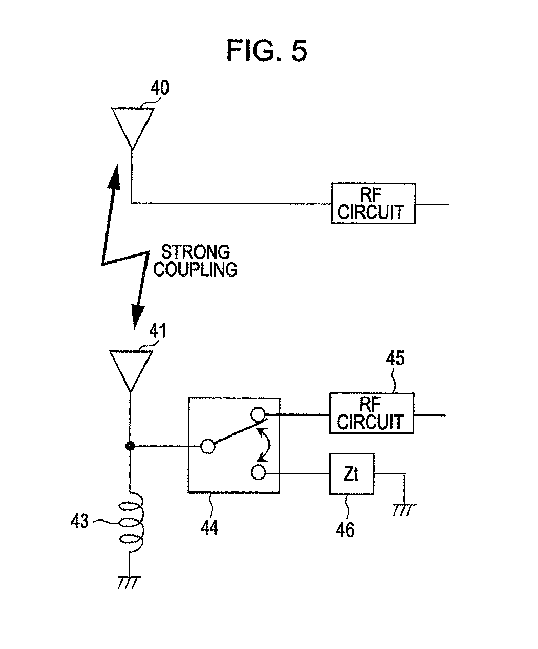

Fig. 4 is a graph showing frequency characteristics of mismatch loss in the configuration of Fig. 3. In Fig. 4, the solid line plotted by Δ marks represents the characteristics of the diversity configuration of the related art. This corresponds to a configuration in which, as in the diversity configuration of the related art shown in Fig. 5, a switch 44 is inserted in series with an RF line connected from a sub-antenna 41 to an RF circuit 45 with respect to a main antenna 40. By connecting the antenna 41 to a termination circuit (impedance Zt) 46 via the switch 44 when the sub-antenna 41 is not selected, an adverse influence by antenna coupling of the sub-antenna 41 with the main antenna 40 is removed. An inductor 43 in Fig. 5 is a matching element, which is connected to the sub-antenna 41.

In such a diversity configuration of the related art, an insertion loss of -0.4 dB or thereabouts occurs over the whole frequency range due to the switch that is directly inserted in the RF line.

In comparison, as indicated by the solid line plotted by □ marks in Fig. 4, in a switched state 1 in which the switch 15 of Fig. 3 is connected to the termination circuit 17 side, a loss is sharply decreased, and a low mismatch loss is maintained from around 800 MHz to around 1.2 GHz to 2.7 GHz or higher. The used frequency band of GPS is within this range. Furthermore, the frequency band of 2.4 GHz used in BT is within this range.

In a switched state 2 in which the switch 15 of Fig. 3 is connected to the matching circuit 16 side, as indicated by the solid line plotted by ◊ marks, a mismatch loss is large up to around 1.5 GHz, and a low mismatch loss is maintained at a frequency band higher than that. This shows a result in which passing (transmission) of a specific band (800 MHz band in this example) to the RF circuit 12 is blocked.

In the first embodiment, conversely, by compensating for an unmatched state that occurs due to the use state of the terminal by the matching circuit 16, mismatch loss is reduced. Consequently, unlike the switched state 2 of Fig. 4, it is expected that mismatch loss is maintained low up to a lower band.

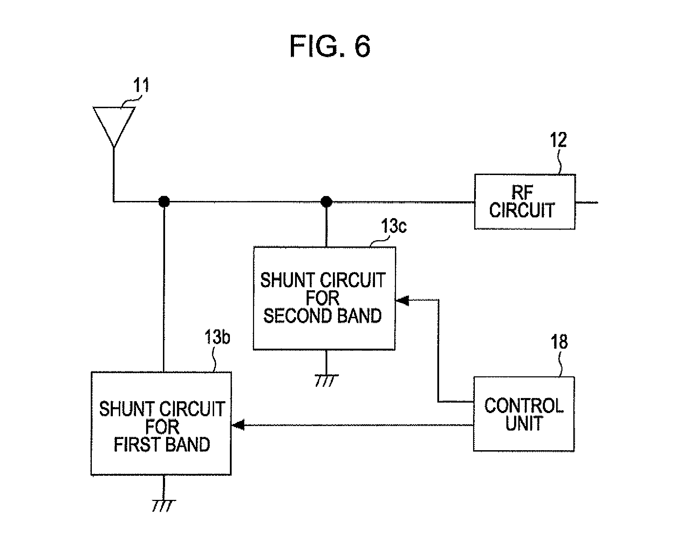

Fig. 6 shows the configuration of a modification of the first embodiment of the present invention.

In the first embodiment, the single shunt circuit 13 is used. However, in this modification, a first shunt circuit 13b and a second shunt circuit 13c are provided. The internal configuration of the shunt circuits 13b and 13c is the same as the shunt circuit 13. However, the shunt circuits 13b and 13c are used for a first band and a second band, respectively, and the pass frequency bands of incorporated filters differ from each other. The termination circuit 17 is assumed to correspond to the band.

With such a modification, it becomes possible for terminals that support multiple bands corresponding to at least a first band and a second band to adjust the matching state of the bands without exerting an influence upon one another.

In the foregoing, the preferred embodiment of the present invention has been described. In addition to that described above, various modifications and changes can be performed. For example, any combinations of the first and second embodiments and the modification can be adopted.

It should be understood by those skilled in the art that various modifications, combinations, sub-combinations and alterations may occur depending on design requirements and other factors insofar as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A wireless communication terminal comprising:
an antenna configured to support first and second frequency bands;
an RF circuit connected to the antenna;
a shunt circuit connected between a connection point of the antenna and the RF circuit, and a ground; and
a control unit configured to control a configuration of the shunt circuit.

2. The wireless communication terminal of claim 1, wherein:
the shunt circuit includes a filter through which one of the first and second frequency bands is passed.

3. The wireless communication terminal of claim 2, wherein:
the shunt circuit includes a matching circuit configured to receive an ouput of the filter and adjust a matching state of the frequency band.

4. The wireless communication terminal of claim 2, wherein:
the shunt circuit includes a termination circuit configured to receive an output of the filter and open an impedance of the shunt circuit.

5. The wireless communication terminal of claim 2, wherein the shunt circuit comprises:
a matching circuit configured to receive an output of the filter and adjust a matching state of the frequency band;
a termination circuit configured to receive an output of the filter and open an impedance of the shunt circuit; and
a switch configured to selectively connect an output of the filter to one of the matching circuit and the termination circuit.

6. The wireless communication terminal of claim 1, further comprising:
a second antenna configured to support the first and second frequency bands, wherein
the antenna is a sub-antenna of a diversity function.

7. The wireless communication terminal of claim 6, wherein the shunt circuit comprises:
a matching circuit configured to receive an output of the filter and adjust a matching state of the frequency band;
a termination circuit configured to receive an output of the filter and open an impedance of the shunt; and
a switch configured to selectively connect an output of the filter to one of the matching circuit and the termination circuit.

8. The wireless communication terminal of claim 5 or Claim 7, wherein:
the control unit is configured to control a configuration of the shunt circuit by controlling the switch.

9. The wireless communication terminal of claim 8, wherein:
the control unit is configured to control the switch based on a use state of the wireless communication terminal.

10. The wireless communication terminal of claim 9, wherein:
the use state corresponds to a state in which a housing of the wireless communication terminal is opened or closed.

11. The wireless communication terminal of claim 10, wherein:
the use state corresponds to a state in which the wireless communication terminal is used for real-time communications or non-real-time communication.

12. The wireless communication terminal of claim 9, wherein:
the use state corresponds to a state in which the diversity function is turned on or off.

13. The wireless communication terminal of claim 12, wherein:
the control unit is configured to control the switch so that an output of the filter is connected to the matching circuit when the diversity function is turned off.

14. The wireless communication terminal of claim 13, wherein:
the matching circuit is configured to cause unmatch to occur so that transmission of a signal of a frequency band passing through the filter is not passed to the RF circuit.

15. The wireless communication terminal of claim 1, further comprising:
a second shunt circuit connected between the connection point of the antenna and the RF circuit, and the ground.
